(19) Europäisches Patentamt / European Patent Office / Office européen des brevets

(11) **EP 2 733 835 A2**

(12) **EUROPEAN PATENT APPLICATION**

(43) Date of publication:
**21.05.2014 Bulletin 2014/21**

(51) Int Cl.:
***H02K 49/10*** (2006.01)

(21) Application number: **13168494.6**

(22) Date of filing: **21.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.11.2012 LV 120175**

(71) Applicants:
- **Rigas Tehniska universitate**
  **Riga 1658 (LV)**
- **Fizikalas Energetikas instituts**
  **1006 Riga (LV)**

(72) Inventors:
- **Puga evs, Vladislavs**
  **LV-1063 R ga (LV)**
- **Ose-Za , Baiba**
  **LV-1006 R ga (LV)**
- **Zic ns, J nis**
  **LV-1046 R ga (LV)**
- **Merijs-Meri, Remo**
  **LV-1002 R ga (LV)**

(74) Representative: **Fortuna, Jevgenijs**
  **Foral Patent Law Office**
  **P.O. Box 98**
  **1050 Riga (LV)**

(54) **REACTIVE MAGNETIC COUPLER**

(57) A reactive magnetic coupler comprises two half couplings, one of which comprises permanent magnets 1, placed on ferromagnetic yoke 2. The second half coupling comprises sector-type ferromagnetic poles 3, which are separated from each other by nonmagnetic gap 4 and are placed on a light, nonmagnetic material body 5. Both half couplings are separated from each other by hermetic, fixed screen 6. When the half coupling with the permanent magnets starts to rotate, the permanent magnets' magnetic flux between conversely magnetized poles closes through the second coupling's sector-form poles. The maximal value of magnetic flux in the airgap $\Phi_{max}$ is in the case, when angle $\theta$ between magnets' axis **(m)** and to **m** nearest ferromagnetic pole axis **(p)** is equal to 45 geometrical degrees. In this case the mutual placement of both (driving and driven) half couplings conforms to coupler's idle mode, where the torque is equal to zero. The magnetic flux in the airgap is minimal $\Phi_{min}$, when the axes **m** and **p** match, that means, $\theta = 0°$. In this case the mutual placement of both half couplings has unstable balance, and the torque is again equal to zero. The offered reactive magnetic coupler's design has improved technical and weight-dimensions parameters.

Fig. 1

## Description

### Technical field

Invention relates to the field of electrical engineering, in particular, the magnetic couplings with permanent magnets.

### Background Art

There is known magnetic coupler [1], in which torque transmission from driving half-coupling to driven half-coupling is carried out by the magnetic field produced by permanent magnets. The torque for such couplings can be transmitted through separation screen, which is designed as a half-cylinder, sealing the device (pump, reactor, mixer) working space from the external environment.

Drawbacks of such couplings are relatively high consumption of valuable Nd-Fe-B permanent magnet material and limited operation of the driven half-coupling in aggressive environment, in vacuum, operating at high temperatures.

Said drawbacks are reduced to a minimum in reactive magnetic couplers [2,3], where magnetic mechanism of one of the half-couplings, operating in high temperatures medium, is made from magnetizing material (electrotechnical steel sheet, steel castings etc.) in the form of ferromagnetic poles on the cylindrical yoke. Drawbacks of such couplings are both torque reduction at equal overall dimensions, and the decrease of technically economic parameters and weight-dimensions parameters.

### Disclosure of the invention

The aim of the invention is to develop reactive magnetic coupler with improved technical characteristics and weight-dimensions parameters.

The objective is achieved as follows: ferromagnetic system of one of half-couplings of the reactive magnetic coupler according to the invention comprises sector-type ferromagnetic poles, which are magnetically insulated from each other by non-magnetized sector-type intervals (gaps), and the number of these ferromagnetic poles in a half-coupling is equal to the number of permanent magnets of the coupling.

To enable operation of the coupler in aggressive medium, sector-type poles are made of polymer matrix composite containing magnetic filler (iron, ferrite) powder.

To increase the reactive magnetic coupler torque, the driving and the driven half-coupling sector-type poles coverage ratio is increased to the range between 0.8 and 0.85.

The invention is further explained in Fig. 1 - Fig. 4.

### Brief description of drawings

Fig. 1 shows the scheme of the reactive magnetic coupler core elements in cross-section; the number of pole pairs for the given embodiment is p = 2;
Fig. 2 is a chart showing the relevance between the maximal torque of the reactive coupling and the deflection angle $\theta$ between axes of permanent magnets and ferromagnetic poles;
Fig. 3 is a chart showing the relevance between maximum torques on poles coverage coefficient $\beta$ of the offered coupling and the closest prior art;
Fig. 4 depicts schematic cross-sections of the offered reactive coupler magnetic field at different deflection angle $\theta$ values; where Fig. 4A - $\theta = 0°$, $\Phi = \Phi_{min}$, $M = 0$; Fig. 4B - $\theta = 45°$, $\Phi = \Phi_{max}$, $M = 0$; Fig. 4C - $\theta = 20°$, $M = M_{max}$.

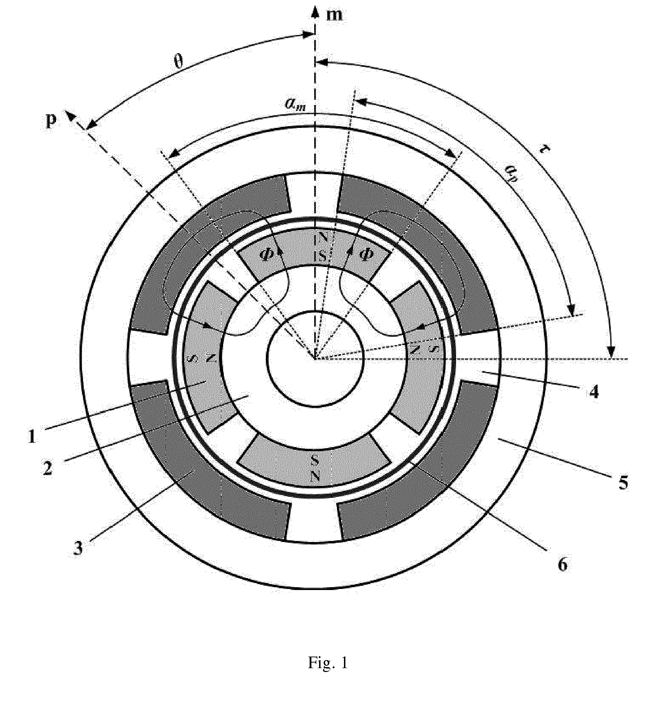

The coupler (Fig. 1) has inner half-coupling, which main elements are permanent magnets 1 placed on ferromagnetic yoke 2. As an example of one embodiment of the invention is considered the coupling with two pairs (p = 2) of permanent magnets. The external half-coupling comprises four sector-type ferromagnetic poles 3, which are separated from each other by non-magnetic gap 4 and are attached to lightweight, non-magnetic material (e.g. aluminium, plastics) body 5. Both interacting half-couplings are being separated with an airtight stationary screen 6 fixed in the air gap 4. As an example in figures is shown the reactive magnetic coupler with inner driving half-coupling. The function of a driving half-coupling can also perform the external (peripheral) half-coupling with ferromagnetic poles.

The reactive magnetic coupler operates as follows. When the half coupling with the permanent magnets starts to rotate, the permanent magnets' magnetic flux between conversely magnetized poles closes through the second coupling's sector-form poles. The direction of magnetic flux $\Phi$ is shown in Fig. 1 by the closed lines with arrows. The maximal value of magnetic flux in the airgap $\Phi_{max}$ is in the case, when angle $\theta$ between magnets' axis (m) and to m nearest ferromagnetic pole axis (**p**) is equal to 45 geometrical degrees. In this case the mutual placement of both (driving and driven) half couplings conforms to coupler's idle mode, where the torque is equal to zero.

The magnetic flux in the airgap is minimal $\Phi_{min}$, when the axes m and **p** match, that means, $\theta = 0°$. Such a mutual disposition of the two half-couplings has unstable equilibrium, and torque value is again equal to zero.

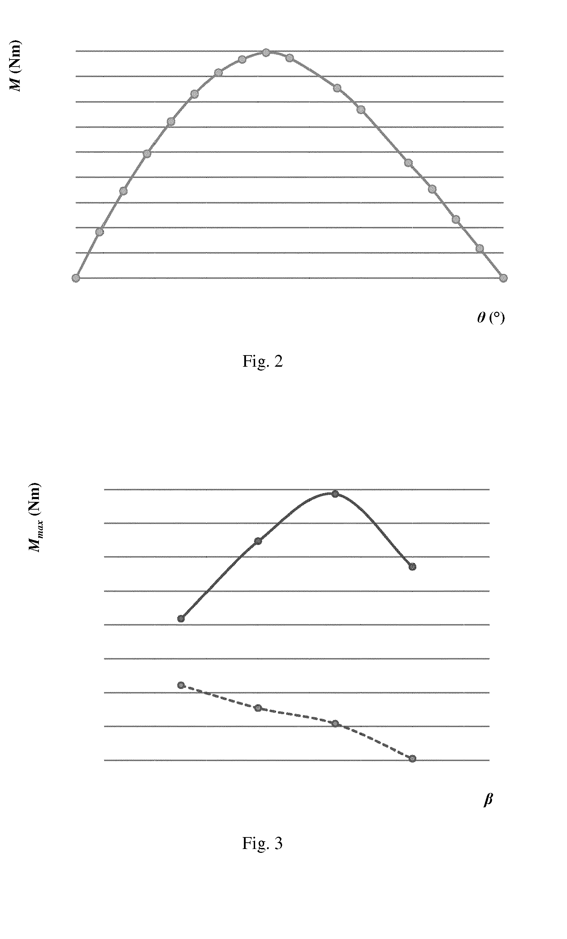

The transition between the maximal and the minimal magnetic flux provides the torque between the driving and the driven half couplings. The torque has its maximal value $M_{max}$, when angle $\theta$ has its value close to 22,5 geometrical degrees. The dependence of torque M from deflection angle $\theta$ is shown in Fig. 2.

Fig. 3 shows coupler calculated torque's peak values $M_{max}$, which depend on poles coverage coefficient β:

$$\beta = \frac{\alpha_p}{\tau} = \frac{\alpha_m}{\tau},$$

where $\alpha_p$ - poles width (°);
$\alpha_m$ - permanent magnets width (°);
τ - pole pitch (°).

For the given coupler the curve is shown by continuous line, but for the solution according to DE3922426 - by dashed line (Fig 3). It can be seen that the offered coupler's torque peak value is much higher than the value, which has the device disclosed in DE3922426. In order to achieve higher torque peak value of the proposed reactive coupler, the poles coverage coefficient β has to be between 0.8 and 0.85.

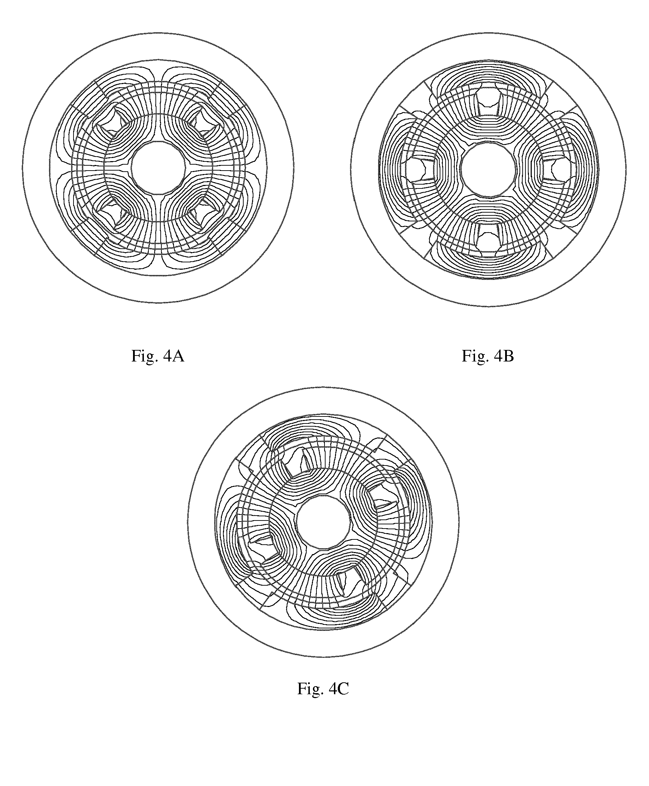

Fig. 4 shows the magnetic field cross-sections of the proposed reactive magnetic coupler at three specific deflection angles θ:

$\theta = 0°$     $\Phi = \Phi_{min}$, $M = 0$ Nm (Fig 4A)
$\theta = 45°$    $\Phi = \Phi_{max}$, $M = 0$ Nm (Fig 4B)
$\theta = 20°$    $M = M_{max} = 0{,}626$ Nm (Fig 4C)

The magnetic field is modelled in a software complex *QuickField,* which is based on the finite elements method, and the torque is calculated from the modelled magnetic field.

For successful operation of the coupler in aggressive environments, and for better weight-dimension indication ratio, the sector-type poles are made from polymer matrix composite containing magnetic fillers (e.g. iron, ferrites) powder. Any thermoplastic polymer (i.a. polyolefines, polyesters, polyamides, vinyl polymers, styrene copolymers) can be used as matrix material. Preference is given to the materials, which can be made on the base of both primary and secondary polymers.

It can be concluded that the proposed magnetic coupler with sector-type poles has much better indices of the maximum torque and weight-dimensions characteristics M/G (Nm/kg) if compared with the one disclosed in DE3922426.

SOURCES OF INFORMATION

[1] Patent application DE 2559042.
[2] Ganzburg L.B. Proyektirovaniye elektromagnitnikh i magnitnikh mehanizmov. Spravochnik. L. Mashinostroyeniye. 1980. 364 str.
[3] Patent application DE3922426.

**Claims**

1. A reactive magnetic coupler comprising a driving and an driven half-couplings, one of which has poles formed by permanent magnets (1), and the other half-coupling's magnetic system is made from ferromagnetic material, wherein said magnetic system of the other half-coupling comprises individual sector-type poles (3) of ferromagnetic material, separated one from another by non-magnetic gap (4).

2. The reactive coupling according to claim 1, wherein the sector-type poles (3) are made of polymer matrix composite containing magnetic filler powder.

3. The reactive magnetic coupler according to claim 1 or 2, wherein the sector-type poles (3) and permanent magnets (1) coverage ratio is selected from the range between 0.8 and 0.85.

4. The reactive magnetic coupler according to any of the preceding claims, wherein the external half-coupling with ferromagnetic sector-type poles (3) is adapted to perform function of the driving half-coupling.

5. The reactive magnetic coupler according to any of the preceding claims, wherein the inner half-coupling is adapted to perform function of the driving half-coupling.

Fig. 1

$M$ (Nm)

$\theta$ (°)

Fig. 2

$M_{max}$ (Nm)

$\beta$

Fig. 3

Fig. 4A

Fig. 4B

Fig. 4C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3922426

- DE 2559042

**Non-patent literature cited in the description**

- **GANZBURG L.B.** Proyektirovaniye elektromagnit-nikh i magnitnikh mehanizmov. Spravochnik. *L. Mashinostroyeniye,* 1980, 364